# EUROPEAN PATENT APPLICATION

(11) **EP 3 229 449 A1**
(43) Date of publication of application: **11.10.2017**
(21) Application number: 14909388.2
(22) Date of filing: 30.12.2014
(51) Int. Cl.: H04M 1/725, H04W 12/02

(54) **DOCUMENT PROTECTION METHOD AND DEVICE**

(71) Applicant: Huawei Technologies Co. Ltd., Shenzhen, Guangdong 518129 (CN)
(72) Inventor: LIU, Jie, Shenzhen Guangdong 518129 (CN)
(74) Representative: Pfenning, Meinig & Partner mbB
(86) International application number: PCT/CN2014/095624
(87) International publication number: WO 2016/106577

(57) **Abstract**

Embodiments of the present invention disclose a file protection method, to resolve a problem that privacy of a file cannot be ensured by manually hiding the file or manually encrypting the file. The method includes: obtaining, by a terminal device, a target file; determining, by the terminal device, whether the target file satisfies a preset file condition; when the target file satisfies the preset file condition, determining, by the terminal device, whether the target file satisfies a corresponding preset protection condition; and when the target file satisfies the preset protection condition, applying, by the terminal device, a corresponding protection solution to the target file. The embodiments of the present invention further provide a corresponding file protection apparatus.

## Description

### TECHNICAL FIELD

The present invention relates to the field of information security, and in particular, to a file protection method and apparatus.

### BACKGROUND

Currently, functions of terminal devices become increasingly powerful. A photo and a video can be conveniently taken and stored. Using a mobile phone as an example, existing mobile phones basically have functions such as taking photos and taking videos, and have a powerful storage capability. Files such an image and a video can be conveniently saved in the mobile phones.

Currently, a mobile phone loss event often occurs. Once the mobile phone is picked up by another person, files in the mobile phone of the owner are leaked. Personal privacy is seriously invaded, which has bad impact on work and life of the owner. Both the terminal device, for example, a mobile phone, and another terminal device have a problem of privacy leakage after being lost. Currently, a file is hidden or encrypted by means of manual setting, to resolve the problem of privacy leakage.

However, no matter whether the file is manually hidden or the file is manually encrypted, a process of manual adding and setting is needed. If the process is not performed in time, file privacy cannot be ensured.

### SUMMARY

The present invention provides a file protection method and apparatus, to resolve a problem that privacy of a file cannot be ensured in real time by manually hiding the file or manually encrypting the file.

A first aspect of the present invention provides a file protection method, including:
obtaining, by a terminal device, a target file;
determining, by the terminal device, whether the target file satisfies a preset file condition;
when the target file satisfies the preset file condition, determining, by the terminal device, whether the target file satisfies a corresponding preset protection condition; and
when the target file satisfies the preset protection condition, applying, by the terminal device, a corresponding protection solution to the target file.

With reference to the first aspect, in a first possible implementation manner, the preset file condition includes:
at least one of a preset file type, a file generation time, a file generation source, a file generation geographical location, or a file tag.

With reference to the first aspect, in a second possible implementation manner, the preset protection condition includes:
at least one of object information, voice information, text information, or geographical location information of a preset file.

With reference to the first aspect, in a third possible implementation manner, the determining, by the terminal device, whether the target file satisfies a corresponding preset protection condition includes:
when the target file is an image file, determining, by the terminal device, whether an attribute feature of the image file satisfies the preset protection condition, where the attribute feature of the image file includes at least one of object information or geographical location information of the image file;
when the target file is a video file, determining, by the terminal device, whether an attribute feature of the video file satisfies the preset protection condition, where the attribute feature of the video file includes at least one of object information or voice information of the video file;
when the target file is an email file, determining, by the terminal device, whether an attribute feature of the email file satisfies the preset protection condition, where the attribute feature of the email file includes text information of the email file, and the text information of the email file includes at least one of keyword information, sender information, or recipient information; and
when the target file is a text file, determining, by the terminal device, whether an attribute feature of the text file satisfies the preset protection condition, where the attribute feature of the text file includes text information of the text file, and the text information of the text file includes at least one of keyword information or creator information.

With reference to the first aspect, in a fourth possible implementation manner, the applying, by the terminal device, a corresponding protection solution to the target file includes: executing at least one of the following protection solutions:
completely hiding, by the terminal device, the target file;
forbidding, by the terminal device, another application other than an application corresponding to the target file to access the target file; and
when the target file is in an accidentally-transmitted state, refreshing or stopping transmitting, by the terminal device, the target file.

With reference to any one of the first aspect or the first to the fourth possible implementation manners of the first aspect, in a fifth possible implementation manner, the method further includes:
when at least one of the preset file condition, the protection condition, or the protection solution is changed, saving, by the terminal device, changed content.

A second aspect of the present invention provides a file protection apparatus, including:
an obtaining module, configured to obtain a target file;
a first determining module, configured to determine whether the target file satisfies a preset file condition;
a second determining module, configured to: when the target file satisfies the preset file condition, determine whether the target file satisfies a corresponding preset protection condition; and
an application module, configured to: when the target file satisfies the preset protection condition, apply a corresponding protection solution to the target file.

With reference to the second aspect, in a first possible implementation manner, the preset file condition includes:
at least one of a preset file type, a file generation time, a file generation source, a file generation geographical location, or a file tag.

With reference to the second aspect, in a second possible implementation manner, the preset protection condition includes:
at least one of object information, voice information, text information, or geographical location information of a preset file.

With reference to the second aspect, in a third possible implementation manner,
the second determining module is specifically configured to: when the target file is an image file, determine whether an attribute feature of the image file satisfies the preset protection condition, where the attribute feature of the image file includes at least one of object information or geographical location information of the image file;
the second determining module is specifically configured to: when the target file is a video file, determine whether an attribute feature of the video file satisfies the preset protection condition, where the attribute feature of the video file includes at least one of object information or voice information of the video file;
the second determining module is specifically configured to: when the target file is an email file, determine whether an attribute feature of the email file satisfies the preset protection condition, where the attribute feature of the email file includes text information of the email file, and the text information of the email file includes at least one of keyword information, sender information, or recipient information; and
the second determining module is specifically configured to: when the target file is a text file, determine whether an attribute feature of the text file satisfies the preset protection condition, where the attribute feature of the text file includes text information of the text file, and the text information of the text file includes at least one of keyword information or creator information.

With reference to the second aspect, in a fourth possible implementation manner, the application module is configured to execute at least one of the following protection solutions:
completely hiding the target file;
forbidding another application other than an application corresponding to the target file to access the target file; and
when the target file is in an accidentally-transmitted state, refreshing or stopping transmitting the target file.

With reference to any one of the second aspect or the first to the fourth possible implementation manners of the second aspect, in a fifth possible implementation manner, the apparatus further includes:
a saving module, configured to: when at least one of the preset file condition, the protection condition, or the protection solution is changed, save changed content.

By means of the foregoing technical solutions, after obtaining a target file, a terminal device determines whether the target file satisfies a preset file condition, if yes, determines whether the target file satisfies a corresponding preset protection condition, and if yes, applies a corresponding protection solution to the target file. Therefore, the terminal device can protect in real time a target file satisfying a condition, thereby ensuring privacy of the target file.

### BRIEF DESCRIPTION OF DRAWINGS

FIG. 1 is a schematic diagram of an embodiment of a file protection method according to an embodiment of the present invention;
FIG. 2 is a schematic diagram of another embodiment of a file protection method according to an embodiment of the present invention;
FIG. 3 is a schematic diagram of an embodiment of a file protection apparatus according to an embodiment of the present invention;
FIG. 4 is a schematic diagram of another embodiment of a file protection apparatus according to an embodiment of the present invention; and
FIG. 5 is a schematic structural diagram of a file protection apparatus according to an embodiment of the present invention.

### DESCRIPTION OF EMBODIMENTS

The present invention provides a file protection method and apparatus, to resolve a problem that privacy of a file cannot be ensured by manually hiding the file or manually encrypting the file.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

In the specification, claims, and accompanying drawings of the present invention, the terms "first", "second", "third", "fourth", and so on are intended to distinguish between different objects but are not intended to describe a specific order. In addition, terms "include" and "have" and any variation thereof are intended to cover non-exclusive including. For example, a process, a method, a system, a product, or a device that includes a series of steps or units is not limited to the listed steps or units, but optionally further includes an unlisted step or unit, or optionally further includes another inherent step or unit of the process, the method, the product, or the device.

For convenience of understanding the embodiments of the present invention, a system to which the embodiments of the present invention are applied is first described herein. The technical solutions in the embodiments of the present invention are applied to various communications systems, such as GSM, a Code Division Multiple Access (CDMA, Code Division Multiple Access) system, Wideband Code Division Multiple Access (WCDMA, Wideband Code Division Multiple Access Wireless), a general packet radio service (GPRS, General Packet Radio Service), and Long Term Evolution (LTE, Long Term Evolution). This is not specifically limited herein.

A terminal device may communicate with one or more core networks by using a radio access network (for example, RAN, Radio Access Network). The terminal device may be a mobile terminal (Mobile Terminal), such as a mobile phone, a tablet computer, a media player, a game console, a palmtop computer, or a notebook computer; or may be a fixed terminal device, such as a personal computer. This is not specifically limited herein.

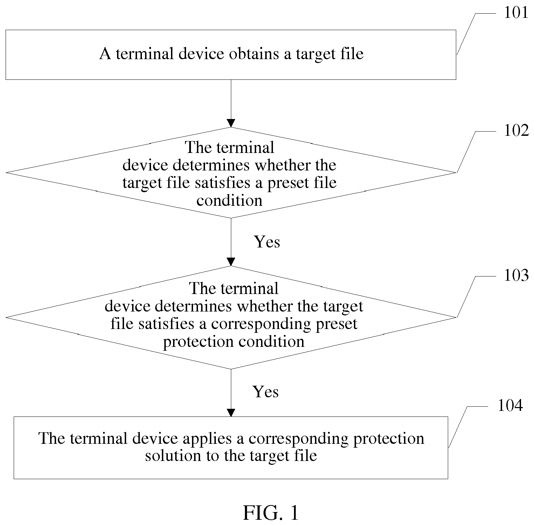

Referring to FIG. 1, an embodiment of a file protection method according to an embodiment of the present invention includes:

101: A terminal device obtains a target file.

In this embodiment of the present invention, before obtaining the target file, the terminal device already saves a preset file condition, a corresponding preset protection condition, and a corresponding protection solution. A correspondence between the file condition, the protection condition, and the protection solution may be saved in a correspondence table; or only two of the file condition, the protection condition, or the protection solution may be saved in a correspondence table, and the remaining one is saved in the terminal device or in another area that the terminal device can access.

It should be noted that the target file may be a file obtained by the terminal device by creating, receiving, downloading, or the like. This is not specifically limited herein.

102: The terminal device determines whether the target file satisfies a preset file condition.

It may be understood that after obtaining the target file, the terminal device further determines whether the target file satisfies the preset file condition. The preset file condition is set by a user or is set by a system by default. After the setting takes effect, the terminal device further selects, according to the file condition, a file needing to be protected.

103: When the target file satisfies the preset file condition, the terminal device determines whether the target file satisfies a corresponding preset protection condition.

It may be understood that when the target file satisfies the preset file condition, the terminal device further determines whether the target file satisfies the corresponding preset protection condition, which is equivalent to that on the basis that the target file satisfies the file condition, the terminal device further selects, according to the corresponding protection condition, a file needing to be protected.

104: When the target file satisfies the preset protection condition, the terminal device applies a corresponding protection solution to the target file.

Different from the prior art, because before obtaining the target file, the terminal device already saves the preset file condition, the corresponding preset protection condition, and the corresponding protection solution, when the target file satisfies a requirement, the terminal device protects the target file in real time, thereby ensuring privacy of the target file.

In this embodiment of the present invention, after obtaining a target file, a terminal device determines whether the obtained target file satisfies a preset file condition, if yes, further determines whether the target file satisfies a corresponding preset protection condition, and if yes, applies a corresponding protection solution to the target file. Therefore, the terminal device can protect in real time a target file satisfying a requirement, thereby ensuring the privacy of the target file.

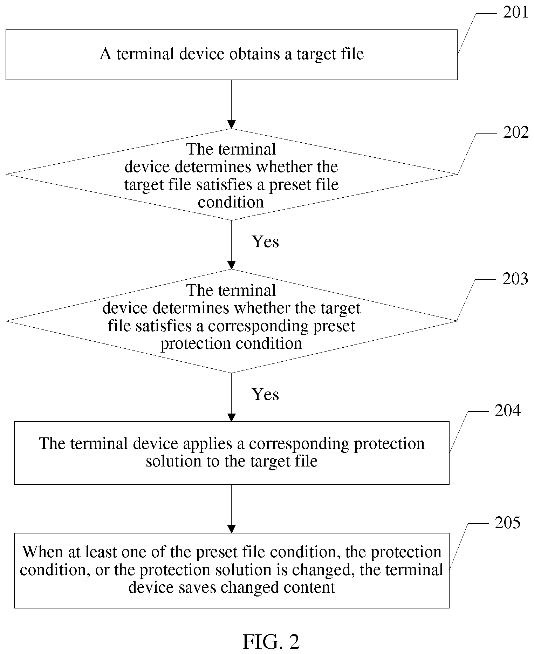

Based on the embodiment of FIG. 1, the technical solution of the present invention is described in detail below. Referring to FIG. 2, another embodiment of a file protection method according to an embodiment of the present invention includes:

201: A terminal device obtains a target file.

In this embodiment of the present invention, before obtaining the target file, the terminal device already saves a preset file condition, a corresponding preset protection condition, and a corresponding protection solution.

It should be noted that the target file may be a file obtained by the terminal device in a manner of creating, receiving, downloading, or the like. This is not specifically limited herein.

202: The terminal device determines whether the target file satisfies a preset file condition.

Optionally, the preset file condition includes:
at least one of a preset file type, a file generation time, a file generation source, a file generation geographical location, or a file tag.

It may be understood that a user may set a condition for the file type, the file generation time, the file generation source (for example, an app or a network address), the file generation geographical location, the file tag (which may be manually added, or may be generated by a machine, and which may be, for example, study, entertainment, health, parenting, or secrets), and the like. The terminal device saves the preset file condition. The file condition may be a combination of multiple conditions, for example, a type of file generated on a day at a geographical location.

203: When the target file satisfies the preset file condition, the terminal device determines whether the target file satisfies a corresponding preset protection condition.

Optionally, the preset protection condition includes:
at least one of object information, voice information, text information, or geographical location information of a preset file.

It should be noted that in addition to the foregoing optional protection conditions, the preset protection condition may be another protection condition. This is not specifically limited herein.

Optionally, when the target file is an image file, the terminal device determines whether an attribute feature of the image file satisfies the preset protection condition, where the attribute feature of the image file includes at least one of object information or geographical location information of the image file.

It should be noted that a format of the image file is BMP, GIF, EPS, DCS, JPEG (*.JPG *.JPEG *.JPE), PCX, PDF, Raw, PICT, PXR, PNG, SCT, TIFF, Targa, or the like. This is not specifically limited herein.

Further, the object information of the image file may be portrait information of one person, may be portrait information of two or more persons, or may be a building, scenery, mark, text, color, color combination, or the like. This is not specifically limited herein. Alternatively, the attribute feature of the image file may further include shooting parameters such as an aperture, a focal length, a shutter speed, and white balance.

When the target file is a video file, the terminal device determines whether an attribute feature of the video file satisfies the preset protection condition, where the attribute feature of the video file includes at least one of object information or voice information of the video file.

It should be noted that a format of the video file is MKV, MOV, AVI, WMV, MP4, RMVB, ASF, SWF, TS, MTS, MPEG1, MPEG2, M4V, F4V, FLV, 3GP, or the like. This is not specifically limited herein.

Further, the object information of the video file may be portrait information of one person, may be portrait information of two or more persons, may be text information included in the video, such as caption or a text in a movie, or may be a scenery, a building, a mark, or the like. This is not specifically limited herein.

When the target file is an email file, the terminal device determines whether an attribute feature of the email file satisfies the preset protection condition, where the attribute feature of the email file includes text information of the email file, and the text information of the email file includes at least one of keyword information, sender information, or recipient information.

It should be noted that a format of the email file is RTF, text, Html, or the like. This is not specifically limited herein.

Further, the attribute feature of the email file may be a size of a email attachment, a receiving or sending time of the email, or the like. This is not specifically limited herein.

When the target file is a text file, the terminal device determines whether an attribute feature of the text file satisfies the preset protection condition, where the attribute feature of the text file includes text information of the text file, and the text information of the text file includes at least one of keyword information or creator information.

It should be noted that the attribute feature of the text file may be edition information or the like. The edition information may include an annotator, an annotation date, annotation content, a text format, and the like. This is not specifically limited herein.

It may be understood that, for example, a user performs setting to protect all files that are generated by an APP from January 1, 2014 and that involve the son of the user, and after this setting takes effect, the terminal device scans each file in the device, to determine whether each target file satisfies a preset file condition, that is, whether each target file is generated by the APP, and a file generation time is January 1, 2014 or is after January 1, 2014. If a target file satisfies the preset file condition, the terminal device determines whether the target file satisfies a preset protection condition, that is, whether the face of the son is recognized in each target file. If the target file satisfies the protection condition, the terminal device applies a corresponding protection solution, that is, performs privacy protection on the target file. Specifically, for example, the target file is not shown in a guest mode.

The terminal device automatically repeats the foregoing actions for each newly-generated file.

It should be noted that when the target file is an audio file, protection may also be performed. A specific principle and a processing process are similar to those of the processing on the foregoing other types of files, and details are not described herein again.

204: When the target file satisfies the preset protection condition, the terminal device applies a corresponding protection solution to the target file.

Optionally, the applying, by the terminal device, a corresponding protection solution to the target file includes: executing at least one of the following protection solutions:
completely hiding, by the terminal device, the target file, where
it may be understood that the terminal device completely hides the target file, and the target file is not shown in any open application or scenario;
forbidding, by the terminal device, another application other than an application corresponding to the target file to access the target file, where
it may be understood that the target file may be shown in any open application or scenario, but another application does not have access to the target file; and
when the target file is in an accidentally-transmitted state, refreshing or stopping transmitting, by the terminal device, the target file, where
it may be understood that when the target file is transmitted accidentally due to a possible manual operation, the terminal device may refresh or stop transmitting the target file in time, thereby ensuring privacy of the target file.

It should be noted that there are many protection solutions for the target file. In addition to the foregoing three solutions, there may be another protection solution. This is not specifically limited herein.

Different from the prior art, the terminal device does not need to manually hide the file or manually encrypt the file every time. Instead, once a condition that is set is generated, a target file satisfying the condition in the terminal device is protected automatically in real time.

205: When at least one of the preset file condition, the protection condition, or the protection solution is changed, the terminal device saves changed content.

It may be understood that when at least one of the preset file condition, the protection condition, or the protection solution is changed, the changed content may be saved in time and a target file is protected according to the changed content.

For example, a user presets, on a mobile phone of the user, that an image and a video of the family of the user are not transferred to the outside and cannot be shown in a guest mode. Once this condition is set, all images of the family in the mobile phone are automatically protected, are not transferred to the outside, and cannot be shown in the guest mode. In addition, an image and a video that are taken later are also automatically protected, are not transferred to the outside, and cannot be shown in the guest mode. That is, a photo and a video of the family that are taken later by the user can be protected automatically and the user does not need to perform manual setting again. In this way, the user only needs to perform setting once, and then, a file satisfying the condition can be automatically protected. In addition, after at least one of the preset file condition, the protection condition, or the protection solution is updated, the updated condition is automatically applied to all existing file satisfying the condition, and the condition is also automatically applied to a newly-generated file, which can bring great convenience to the user and improve the file protection efficiency. It may be preset in a manner of setting the face and voice of the family, a location, or the like that the image and the video of the family of the user are not transferred to the outside. For example, a face in a photo is specified as the family, and the mobile phone may determine, by means of the prior art such as object recognition or facial recognition, an image including the family, apply corresponding protection to the determined image, and perform recognition on and apply corresponding protection to each newly-added image.

Similarly, timely and different protection may also be performed on another file type, for example, an audio file, by means of a preset condition. This is not specifically limited herein.

In this embodiment of the present invention, after obtaining a target file, a terminal device determines whether the target file satisfies a preset file condition, if yes, determines whether the target file satisfies a corresponding preset protection condition, and if yes, applies a corresponding protection solution to the target file. When at least one of the preset file condition, the protection condition, or the protection solution is changed, the terminal device saves changed content. Therefore, the terminal device can protect in real time a target file satisfying a condition, thereby ensuring privacy of the target file.

To better implement the foregoing related method in the embodiments of the present invention, the following further provides a related apparatus configured to implement the foregoing method.

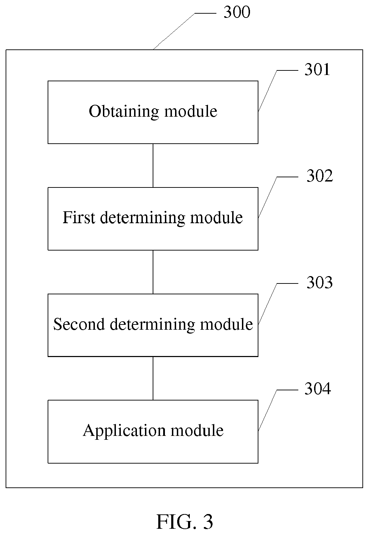

Referring to FIG. 3, an embodiment of a file protection apparatus 300 according to an embodiment of the present invention includes:
an obtaining module 301, configured to obtain a target condition;
a first determining module 302, configured to determine whether the target file obtained by the obtaining module 301 satisfies a preset file condition;
a second determining module 303, configured to: when the target file satisfies the preset file condition, determine whether the target file satisfies a corresponding preset protection condition; and
an application module 304, configured to: when the target file satisfies the preset protection condition, apply a corresponding protection solution to the target file.

In this embodiment of the present invention, after the obtaining module obtains a target file, the first determining module determines whether the target file satisfies a preset file condition; if yes, the second determining module determines whether the target file satisfies a corresponding preset protection condition; and if yes, a corresponding protection solution is applied to the target file. Therefore, the terminal device can protect in real time a target file satisfying a condition, thereby ensuring privacy of the target file.

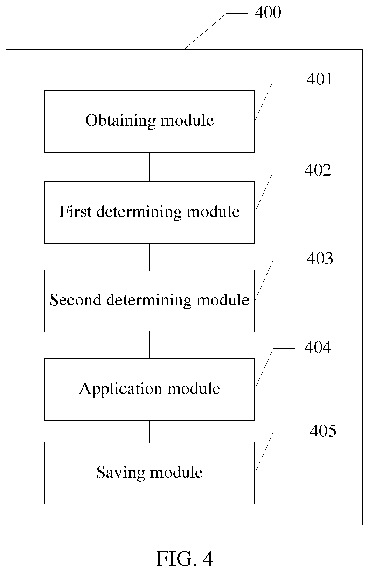

Referring to FIG. 4, another embodiment of a file protection apparatus 400 according to an embodiment of the present invention includes: an obtaining module 401, a first determining module 402, a second determining module 403, an application module 404, and a saving module 405.

The obtaining module 401 is configured to obtain a target file.

The first determining module 402 is configured to determine whether the target file obtained by the obtaining module 401 satisfies a preset file condition.

Optionally, the preset file condition includes:
at least one of a preset file type, a file generation time, a file generation source, a file generation geographical location, or a file tag.

The second determining module 403 is configured to: when the target file satisfies the preset file condition, determine whether the target file satisfies a corresponding preset protection condition.

Optionally, the preset protection condition includes:
at least one of object information, voice information, text information, or geographical location information of a preset file.

Optionally, the second determining module 403 is specifically configured to: when the target file is an image file, determine whether an attribute feature of the image file satisfies the preset protection condition, where the attribute feature of the image file includes at least one of object information or geographical location information of the image file;
the second determining module 403 is specifically configured to: when the target file is a video file, determine whether an attribute feature of the video file satisfies the preset protection condition, where the attribute feature of the video file includes at least one of object information or voice information of the video file;
the second determining module 403 is specifically configured to: when the target file is an email file, determine whether an attribute feature of the email file satisfies the preset protection condition, where the attribute feature of the email file includes text information of the email file, and the text information of the email file includes at least one of keyword information, sender information, or recipient information; and
the second determining module 403 is specifically configured to: when the target file is a text file, determine whether an attribute feature of the text file satisfies the preset protection condition, where the attribute feature of the text file includes text information of the text file, and the text information of the text file includes at least one of keyword information or creator information.

The application module 404 is configured to: when the target file satisfies the preset protection condition, apply a corresponding protection solution to the target file.

Optionally, the application module 404 is configured to execute at least one of the following protection solutions:
completely hiding the target file;
forbidding another application other than an application corresponding to the target file to access the target file; and
when the target file is in an accidentally-transmitted state, refreshing or stopping transmitting the target file.

The saving module 405 is configured to: when at least one of the preset file condition, the protection condition, or the protection solution is changed, save changed content.

In this embodiment of the present invention, after the obtaining module obtains a target file, the first determining module determines whether the target file satisfies a preset file condition; if yes, the second determining module determines whether the target file satisfies a corresponding preset protection condition; if yes, a corresponding protection solution is applied to the target file; and when at least one of the preset file condition, the protection condition, or the protection solution is changed, the saving module saves the changed content. Therefore, the terminal device can protect in real time a target file satisfying a condition, thereby ensuring privacy of the target file.

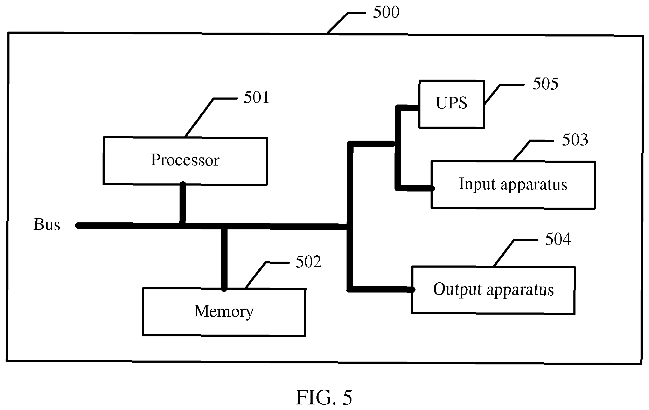

The embodiments shown in FIG. 3 and FIG. 4 describe a specific structure of the file protection apparatus from the perspective of functional modules. The following describes the specific structure of the file protection apparatus with reference to an embodiment of FIG. 5 from the perspective of hardware.

Referring to FIG. 5, FIG. 5 is a schematic structural diagram of a file protection apparatus 500 according to an embodiment of the present invention. The file protection apparatus 500 may include: at least one processor 501 (for example, a CPU, a Central Processing Unit), at least one network interface or another communications interface, a memory 502, at least one communications bus, at least one input apparatus 503, at least one output apparatus 504, and an uninterruptible power system UPS 5011, which is configured to implement connection and communication between these apparatuses. The processor 501 is configured to execute an executable module, such as a computer program, stored in the memory 502. The memory 502 may include a high-speed random access memory (RAM, Random Access Memory), and may further include a non-volatile memory (non-volatile memory), such as at least one magnetic disk memory. Communication connection between a system gateway and at least one other network element is implemented by using the at least one network interface (which may be wired or wireless), and the Internet, a wide area network, a local network, a metropolitan area network, and the like may be used.

As shown in FIG. 5, in some implementation manners, the memory 502 stores a program instruction, the program instruction may be executed by the processor 501, and the processor 501 specifically performs the following steps:
obtaining a target condition;
determining whether the target file satisfies a preset file condition;
when the target file satisfies the preset file condition, determining whether the target file satisfies a corresponding preset protection condition; and
when the target file satisfies the preset protection condition, applying a corresponding protection solution to the target file.

In some implementation manners, the processor 501 may further perform the following steps:
when the target file is an image file, determining whether an attribute feature of the image file satisfies the preset protection condition, where the attribute feature of the image file includes at least one of object information or geographical location information of the image file;
when the target file is a video file, determining whether an attribute feature of the video file satisfies the preset protection condition, where the attribute feature of the video file includes at least one of object information or voice information of the video file;
when the target file is an email file, determining whether an attribute feature of the email file satisfies the preset protection condition, where the attribute feature of the email file includes text information of the email file, and the text information of the email file includes at least one of keyword information, sender information, or recipient information; and
when the target file is a text file, determining whether an attribute feature of the text file satisfies the preset protection condition, where the attribute feature of the text file includes text information of the text file, and the text information of the text file includes at least one of keyword information or creator information.

In some implementation manners, the processor 501 may further perform the following step:

The applying a corresponding protection solution to the target file includes: executing at least one of the following protection solutions:
completely hiding the target file;
forbidding another application other than an application corresponding to the target file to access the target file; and
when the target file is in an accidentally-transmitted state, refreshing or stopping transmitting the target file.

In some implementation manners, the processor 501 may further perform the following step:
when at least one of the preset file condition, the protection condition, or the protection solution is changed, saving changed content.

As can be seen from the above, after obtaining a target file, the terminal device determines whether the target file satisfies a preset file condition, if yes, determines whether the target file satisfies a corresponding preset protection condition, and if yes, applies a corresponding protection solution to the target file. Therefore, the terminal device can protect in real time a target file satisfying a condition, thereby ensuring privacy of the target file.

It should be noted that, in the foregoing embodiments, the descriptions of the embodiments have their respective focuses. For a part that is not described in detail in an embodiment, reference may be made to related descriptions in other embodiments. For example, for a part not described in detail in an embodiment described in FIG. 11, refer to a related description of a method embodiment or an apparatus embodiment in FIG. 1 to FIG. 10.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A file protection method, comprising:
obtaining, by a terminal device, a target file;
determining, by the terminal device, whether the target file satisfies a preset file condition;
when the target file satisfies the preset file condition, determining, by the terminal device, whether the target file satisfies a corresponding preset protection condition; and
when the target file satisfies the preset protection condition, applying, by the terminal device, a corresponding protection solution to the target file.

2. The protection method according to claim 1, wherein the preset file condition comprises:
at least one of a preset file type, a file generation time, a file generation source, a file generation geographical location, or a file tag.

3. The protection method according to claim 1, wherein the preset protection condition comprises:
at least one of object information, voice information, text information, or geographical location information of a preset file.

4. The protection method according to claim 1, wherein the determining, by the terminal device, whether the target file satisfies a corresponding preset protection condition comprises:
when the target file is an image file, determining, by the terminal device, whether an attribute feature of the image file satisfies the preset protection condition, wherein the attribute feature of the image file comprises at least one of object information or geographical location information of the image file;
when the target file is a video file, determining, by the terminal device, whether an attribute feature of the video file satisfies the preset protection condition, wherein the attribute feature of the video file comprises at least one of object information or voice information of the video file;
when the target file is an email file, determining, by the terminal device, whether an attribute feature of the email file satisfies the preset protection condition, wherein the attribute feature of the email file comprises text information of the email file, and the text information of the email file comprises at least one of keyword information, sender information, or recipient information; and
when the target file is a text file, determining, by the terminal device, whether an attribute feature of the text file satisfies the preset protection condition, wherein the attribute feature of the text file comprises text information of the text file, and the text information of the text file comprises at least one of keyword information or creator information.

5. The protection method according to claim 1, wherein the applying, by the terminal device, a corresponding protection solution to the target file comprises: executing at least one of the following protection solutions:
completely hiding, by the terminal device, the target file;
forbidding, by the terminal device, another application other than an application corresponding to the target file to access the target file; and
when the target file is in an accidentally-transmitted state, refreshing or stopping transmitting, by the terminal device, the target file.

6. The protection method according to any one of claims 1 to 5, further comprising:
when at least one of the preset file condition, the protection condition, or the protection solution is changed, saving, by the terminal device, changed content.

7. A file protection apparatus, comprising:
an obtaining module, configured to obtain a target file;
a first determining module, configured to determine whether the target file satisfies a preset file condition;
a second determining module, configured to: when the target file satisfies the preset file condition, determine whether the target file satisfies a corresponding preset protection condition; and
an application module, configured to: when the target file satisfies the preset protection condition, apply a corresponding protection solution to the target file.

8. The protection apparatus according to claim 7, wherein the preset file condition comprises:
at least one of a preset file type, a file generation time, a file generation source, a file generation geographical location, or a file tag.

9. The protection apparatus according to claim 7, wherein the preset protection condition comprises:
at least one of object information, voice information, text information, or geographical location information of a preset file.

10. The protection apparatus according to claim 7, wherein
the second determining module is specifically configured to: when the target file is an image file, determine whether an attribute feature of the image file satisfies the preset protection condition, wherein the attribute feature of the image file comprises at least one of object information or geographical location information of the image file;
the second determining module is specifically configured to: when the target file is a video file, determine whether an attribute feature of the video file satisfies the preset protection condition, wherein the attribute feature of the video file comprises at least one of object information or voice information of the video file;
the second determining module is specifically configured to: when the target file is an email file, determine whether an attribute feature of the email file satisfies the preset protection condition, wherein the attribute feature of the email file comprises text information of the email file, and the text information of the email file comprises at least one of keyword information, sender information, or recipient information; and
the second determining module is specifically configured to: when the target file is a text file, determine whether an attribute feature of the text file satisfies the preset protection condition, wherein the attribute feature of the text file comprises text information of the text file, and the text information of the text file comprises at least one of keyword information or creator information.

11. The protection apparatus according to claim 7, wherein the application module is configured to execute at least one of the following protection solutions:
completely hiding the target file;
forbidding another application other than an application corresponding to the target file to access the target file; and
when the target file is in an accidentally-transmitted state, refreshing or stopping transmitting the target file.

12. The protection apparatus according to any one of claims 7 to 11, further comprising:
a saving module, configured to: when at least one of the preset file condition, the protection condition, or the protection solution is changed, save changed content.
